# EUROPÄISCHE PATENTSCHRIFT

(11) **EP 0 418 516 B1**
(45) Veröffentlichungstag und Bekanntmachung des Hinweises auf die Patenterteilung: **19.01.1994**
(21) Anmeldenummer: 90114409.7
(22) Anmeldetag: 27.07.1990
(51) Int. Cl.: B60N 2/02

(54) **Vorrichtung zum Verstellen von Automobilsitzen**
Device for adjusting vehicle seats
Dispositif pour régler des sièges de véhicules

(30) Priorität: 16.09.1989 DE 3931042
(43) Veröffentlichungstag der Anmeldung: 27.03.1991
(73) Patentinhaber: BBS Kraftfahrzeugtechnik Aktiengesellschaft, 77761 Schiltach (DE)
(72) Erfinder: Hauger, Rolf, Dipl.-Ing., D-7622 Schiltach (DE)
(74) Vertreter: Kinkelin, Ulrich, Dipl.-Ing.

(56) Entgegenhaltungen:
- EP-A- 0 067 893
- EP-A- 0 068 223
- EP-A- 0 317 381
- WO-A-89/03322
- FR-A- 2 558 781
- GB-A- 2 136 086
- PATENT ABSTRACTS OF JAPAN, Band 10, Nr. 189 (M-494)[2245], 3. Juli 1986;& JP-A-61 33 333 (SECOH GIKEN) 17-02-1986

## Beschreibung

Die Erfindung betrifft eine Vorrichtung gemäß dem Oberbegriff des Patentanspruchs.

Sowohl aus Gründen des Komforts als auch der Sicherheit als auch der Gesundheit, werden heutzutage viele Teile an einem Automobilsitz verstellt. Zum Beispiel kann die Kopfstütze der Höhe nach eingestellt werden. Es kann die Höhe und die Neigung des Unterteils des Sitzes, sowie sein Abstand zum Lenkrad eingestellt werden. Es kann die Lehne der Neigung nach eingestellt werden, es können Stützkörper eingestellt werden, die eine bessere Seitenführung des Oberkörpers ergeben. Es können Stützkörper eingestellt werden, die das Rückgrat stützen, dem Becken einen richtigen Halt geben und so weiter.

Eine Vorrichtung der im Oberbegriff des Patentanspruchs bezeichneten Art ist aus der EP - A - 0 067 893 bekannt. Der Vorteil besteht darin, daß nur ein einziger Elektromotor benötigt wird. Jedoch bedingt die gezeigte Lagerung des Trägen und die Art seines Antriebs eine große Bauhöhe der Vorrichtung, so daß es schwierig ist, sie in einem Sitz unterzubringen. Der Antrieb des Trägers erfolgt über ein Schrittgetriebe (Maltesergetriebe), so daß der Träger nur in gleich großen Drehschritten verdreht werden kann. Dementsprechend können die Ausgangswellen nur in regelmäßiger Winkelteilung rund um die Eingangswelle angeordnet werden, was die Anpassung an die Platzverhältnisse erschwert. Schließlich wird der Hilfsmotor für das Schrittgetriebe ungleichmäßig (sprunghaft) belastet, das heißt, die Hauptarbeit für das Weiterschalten erfolgt während eines Bruchteils der Umdrehung des Malteserrades. Die Folge ist, daß der Hilfsmotor auf eine höhere Spitzenleistung ausgelegt werden muß.

Eine prinzipiell gleiche Vorrichtung, ebenfalls mit Schrittgetriebe, ist aus der EP - A - 0 068 223 bekannt. Hier ist das zweite Zahnrad nicht an einem seitlich neben der Eingangswelle am Träger befestigten Lagerbolzen gelagert, sondern an einem unmittelbar auf einer Zentralachse gelagerten Exzenterzapfen des Trägers, wodurch dieses zweite Zahnrad stabiler gehalten wird. Es liegt eine Konfiguration eines Planetengetriebes vor, mit dem ersten Zahnrad als Sonnenrad und dem zweiten Zahnrad als Planetenrad, welches axial über den dritten Zahnrädern liegt. Die Gesamtbauhöhe wird bestimmt durch die axialen Längen der Malteserscheibe, des dritten Zahnradkranzes, des ersten Zahnradkranzes und schließlich der Lagerung des ersten Zahnrades. Die Bauhöhe ist daher groß, wodurch es schwierig ist, die Vorrichtung in einem Sitz unterzubringen .

Aus der GB - A - 2 136 086 ist eine der zuvor genannten Vorrichtung vergleichbare Vorrichtung bekannt, wobei lediglich der Träger nicht über ein Schrittschaltwerk, sondern über einen seitlich abstehenden Handhebel verschwenkt wird, so daß prinzipiell die Ausgangswellen in unterschiedlichen Winkellagen positioniert werden könnten. Die Bauhöhe jedoch ist, wie zuvor dargelegt, sehr groß.

Aus der FR - A - 2 558 781 ist eine Vorrichtung bekannt, die der im Oberbegriff des Patentanspruchs bezeichneten Art ähnlich ist. Unterschiedlich ist, daß die Ausgangswellen und die Eingangswelle nur sehr labil einseitig gelagert sind, bedingt durch den davor liegenden Handhebel. Der zu diesem Handhebel verlängerte Träger kann zwar prinzipiell in beliebigen Winkelschritten verstellt werden, eignet sich aber nicht zur Automatisierung. Vor allem ist der Träger an einem Schwenkzapfen gelagert, der von der Eingangswelle separiert ist und folglich schwenkt das zweite Zahnrad in einer nicht zuverlässig koaxialen Bahn um das erste Zahnrad. Die Drehmomentübertragung ist daher durch Klemmung oder zu großes Spiel zwischen den Zahnrädern sehr unterschiedlich, je nach der Lage des Schwenkzapfens, der gemäß fertigungsbedingter Toleranzen praktisch kaum exakt mit der Eingangswelle fluchtet. Diese Vorrichtung ist daher nicht praxistauglich.

Eine weitere gattungsähnliche Vorrichtung ist aus der WO - A - 8 903 322 bekannt, wobei die Eingangswelle in einem der Wandteile des Rahmens direkt gelagert ist, im anderen Wandteil aber mittels einer zum Träger gehörenden Hülse nur mittelbar gelagert ist. Diese Hülse verbindet den im Inneren befindlichen Träger mit einem außerhalb angeordneten Schwenkhebel. Toleranzen der Lagerung der Hülse im Wandteil einerseits und der Eingangswelle in der Hülse andererseits addieren sich daher. Die Drehmomentübertragung ist folglich durch Klemmung oder zu großes Spiel zwischen den Zahnrädern je nach Drehstellung des Trägers unterschiedlich. Diese Vorrichtung ist daher nicht praxistauglich.

Die Kraftübertragung von den Ausgangswellen zu den Bewegungswandlern an den verschiedenen Positionen des Sitzes erfolgt zweckmäßigerweise mit hohen Drehzahlen, was gewissermaßen Kraft durch Geschwindigkeit ersetzt und somit dunnere, flexiblere Übertragungswellen erlaubt, die problemlos im Sitz untergebracht werden können. Dies bedeutet, daß auch die Zahnräder im Schaltgetriebe mit hohen Drehzahlen rotieren, so daß Lagefehler (Spiel oder Klemmung des Zahneingriffs, Präzision der Wellenlagerung) schnell zu störenden sirenenartigen Laufgeräuschen führen, was bei den anzustrebenden niedrigen Geräuschpegeln gerade bei der Fahrzeugklasse untragbar ist, bei der komfortable Sitzverstellungen besonders in Frage kommen. Solche Laufgeräusche bisheriger Schaltgetriebe sind die Ursache dafür, daß zumindest von deutschen Autumobilherstellern noch der teurere Weg bevorzugt wird, jedem Bewegungswandler jeweils einen Elektromotor zuzuordnen. Abgesehen von der komfortmäßigen Einschränkung sind starke Laufgeräusche auch Ausdruck von vielfältigen Resonanzerscheinungen der bewegten Teile, was auf entsprechenden Verschleiß der Zahnräder und ihrer Lagerungen hinweist, woraus die Tendenz zur Verschlechterung folgt, selbst wenn das Schaltgetriebe anfangs noch gerade erträglich laufen sollte.

Aufgabe der Erfindung ist es, eine Vorrichtung der gattungsgemäßen Art anzugeben, bei der eine praxisgerechte Baugröße mit einer praxistauglichen Betriebsart gepaart ist.

Diese Aufgabe wird durch die kennzeichnenden Merkmale des Patentanspruchs gelöst.

Die verfügbare Bauhöhe wird optimal als Lagerbasis für den Träger genutzt, wodurch das zweite Zahnrad stabil gelagert wird. Die Zahnräder liegen dabei im Wesentlichen in einer radialen Ebene nebeneinander, was wenig Bauhöhe beansprucht. Durch den stabil gehaltenen Zahneingriff werden Klemmungen oder zu großes Spiel vermieden, so daß der Verschleiß und die Geräuschentwicklung vermindert werden. Mit dem Antriebsteil als Außenzahnkranz ist eine stufenlose, beliebige Verdrehung des Trägers möglich, wobei hier die Krafteinleitung innerhalb der Rahmenwände derart erfolgt, daß der Träger stabil in der eingestellten Drehlage gehalten wird, was ebenfalls einer störenden Schwingung entgegenwirkt.

Die Erfindung wird nachfolgend anhand von in der Zeichnung dargestellten Ausführungsbeispielen näher beschrieben.

Es zeigt :
- Fig. 1: eine schematische Seitenansicht eines Automobilsitzes mit einer Vorrichtung gemäß einer ersten Ausführungsform der Erfindung,
- Fig.2: ein zweites schematisches Ausführungsbeispiel der erfindungsgemäßen Vorrichtung,
- Fig.3: eine Seitenansicht eines Prototyps des Schaltgetriebes gemäß der Erfindung von der Ausgangsseite her gesehen,
- Fig.4: einen Schnitt längs der Linie 4 4 von Fig.3 in vergrößertem Maßstab,
- Fig.5: eine Rückansicht des Schaltgetriebes,
- Fig.6: eine Seitenansicht wie Fig.3, jedoch ohne Deckplatte und mit Elektromotor,
- Fig.7: eine Rückansicht wie Fig.5, jedoch ohne Käfig,
- Fig.8: eine Seitenansicht des Käfigs aus Fig.3,
- Fig.9: eine Seitenansicht eines Zahns.

Ein Automobilsitz 11 hat ein Unterteil 12 und eine Lehne 13. Am Unterteil 12 ist ein Wählrad 14 vorgesehen, das drehbar ist und dessen Drehstellung durch eine biegsame Welle 16 einem Schaltgetriebe 17 mitgeteilt wird. Gleichfalls am Unterteil 12 befestigt ist ein elektrischer Schalter 18, mit dem man über eine elektrische Leitung 19 einen Elektromotor 21 ansteuern kann und zwar sowohl im Vorwärtslauf als auch Rückwärtslauf. Es handelt sich um einen der für solche Zwecke üblicherweise verwendeten Elektromotor mit einer Leistungsaufnahme von 35 bis 50 Watt und einer Nenndrehzahl von 2000 bis 4700 U/min . Der Elektromotor 21 hat rechts einen Ausgang 22 und links einen Ausgang 23. Durch eine biegsame Welle 24 liefert der Elektromotor 21 von seinem Ausgang 22 Drehenergie zum Schaltgetriebe 17. Der Ausgang 23 dient dazu, eventuell weiterhin vorhandene Teile mit Drehenergie zu versorgen.

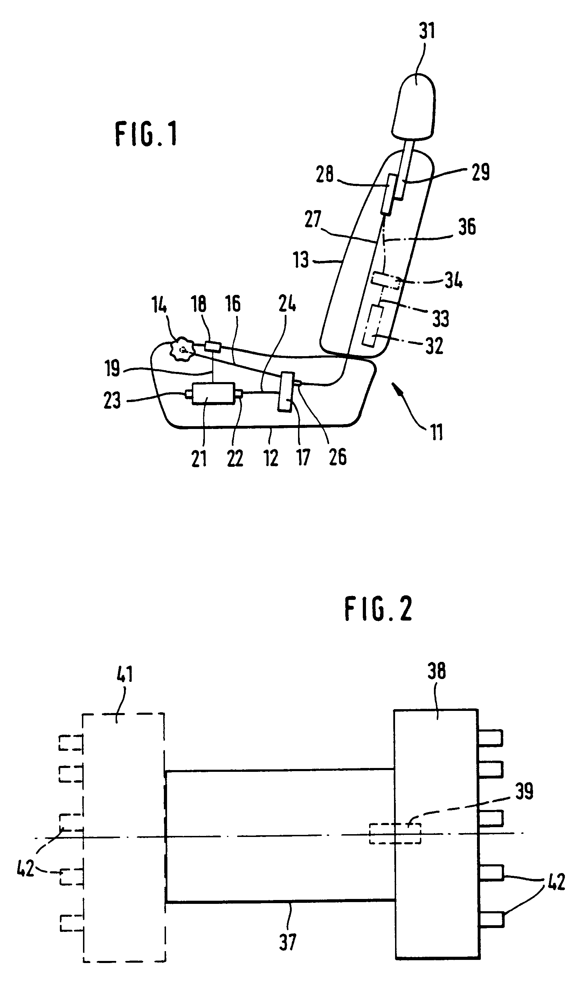

Das Schaltgetriebe 17 hat mehrere Ausgänge, von denen in Figur 1 nur der Ausgang 26 gezeichnet ist. Von diesem führt eine biegsame Welle 27 durch den nicht dargestellten Schwenkpunkt Unterteil/Lehne in die Lehne und dort zu einem Bewegungswandler 28, dessen Stator fest mit der Lehne 13 verbunden ist. Sein Rotor ist mit einem Haltebügel 29 einer Kopfstütze 31 verbunden. Je nach Drehsinn der biegsamen Welle 27 bewegt der Bewegungswandler 28 den Haltebügel 29 aufwärts oder abwärts.

Strichpunktiert in der Lehne 13 angedeutet ist der Fall, wenn man einen Elektromotor 32 samt biegsamer Welle 33 und Schaltgetriebe 34 in der Lehne 13 anordnen will und dann über eine biegsame Welle 36 den Bewegungswandler 28 betätigt.

Gemäß Figur 2 ist der Elektromotor 37 mit dem Schaltgetriebe 38 nicht über eine biegsame Welle verbunden. Vielmehr sind beide Baueinheiten starr miteinander verbunden und haben hier eine gestrichelt angedeutete gemeinsame Welle 39. Links in Figur 2 wird anhand des gestrichelt dargestellten Schaltgetriebes 41 gezeigt, daß der zweite Ausgang des Elektromotors 37 zum Antrieb eines weiteren Schaltgetriebes verwendet werden kann. Zwecks besseren Zugangs durch die biegsamen Wellen schauen die Ausgänge 42 vom Elektromotor 37 weg.

Die Prototypausführung gemäß der Erfindung beruht auf einer Konstruktion, bei der die Zahnräder aus Kunststoff sind und der Rest aus Metall ist. Das Schaltgetriebe 41 umfaßt eine vordere Platine 43 aus Metall mit den Maßen 66 x 74 mm. Sie ist rechteckig. Ihr entspricht parallel und deckungsgleich eine hintere Platine 44. Zwischen ihren vier Eckbereichen sind vier Distanzhülsen 46 vorgesehen, die eine Länge gleich dem lichten Abstand der Platinen 43, 44 haben. Sie werden von Schrauben 47 durchquert, deren Kopf 48 gegen die Außenseite 49 der Platine 43 gezogen wird, weil das Außengewinde des Schafts der Schrauben 47 in ein Innengewinde 51 der Platine 44 eingeschraubt ist. Diese Konstruktion ist sozusagen ein biegesteifer, montagefester, schützender Rahmen.

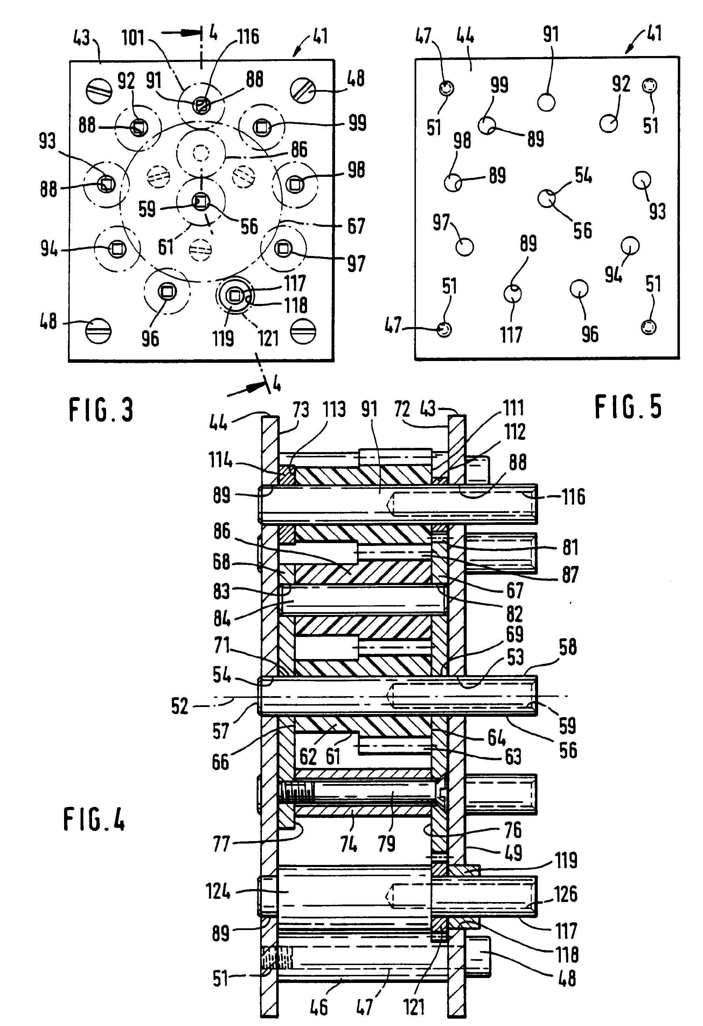

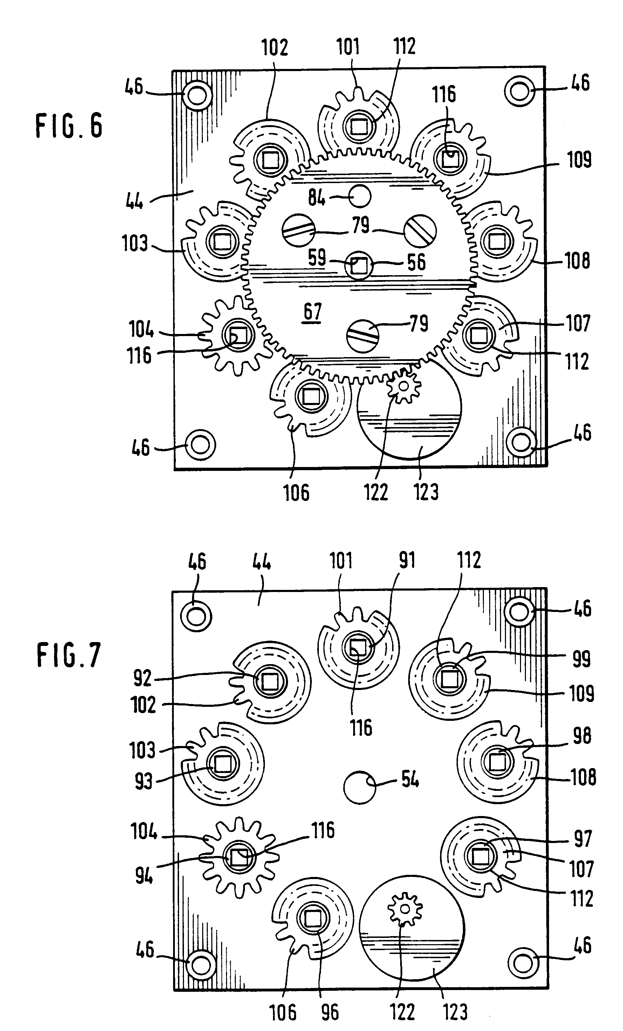

Fluchtend mit einer geometrischen Mittenachse 52 sind in beide Platinen 43, 44 kreisrunde Durchgangslöcher 53, 54 eingearbeitet. Hierin drehbar ist eine Eingangswelle 56 gelagert, deren Ende 57 nur wenig über die Platine 44 hinaussteht. Der andere Endbereich 58 steht erheblich vor. In ihm ist ein nach außen offener Innen-Vierkant 59 eingearbeitet. In der aus Figur 4 und 7 ersichtlichen Lage sitzt auf der Eingangswelle 56 ein erstes Zahnrad 61, das aus Kunststoff ist und mit seinem Schaft 62 weder in Längsrichtung noch in Umfangsrichtung gegenüber der Eingangswelle 56 verdrehbar ist. Es hat Zähne 63, sowie eine vordere Stirnfläche 64 und eine hintere Stirnfläche 66. Im lichten Abstand dieser Stirnflächen 64,66 und ohne diese rotatorisch festzulegen ist eine vordere Zahnscheibe 67 und eine hintere Scheibe 68 koaxial zur Mittenachse 52 vorgesehen. Die Zahnscheibe 67 und die Scheibe 68 haben ein koaxiales kreiszylindrisches Durchgangsloch 69, 71 mit dem die Zahnscheibe 67 und Scheibe 68 drehbar auf der Eingangswelle 56 gelagert sind. Die Zahnscheibe 67 hat einen geringen Abstand von der Innenfläche 72 der Platine 43 und ebenso ist es mit der Scheibe 68 hinsichtlich der Innenfläche 73 der Platine 44. Zusammen mit drei jeweils um 120° versetzte Distanzhülsen 74, die zwischen der Innenfläche 76 der Zahnscheibe 67 und der Innenfläche 77 der Scheibe 68 vorgesehen sind, hat man einen Träger 78 geschaffen, der durch Schrauben 79 zusammengehalten wird. Deren Köpfe 81 sitzen versenkt in der Zahnscheibe 67 und sind mit ihrem in Figur 4 linken Ende in Innengewindelöcher der Scheibe 68 eingeschraubt. Gemäß Figur 4 hat die Scheibe 68 einen wesentlich kleineren Durchmesser als die Zahnscheibe 67. Letztere trägt einen Außenzahnkranz 81.

Achsparallel zu der geometrischen Mittenachse 52 sind im Umfangsbereich der Zahnscheibe 67 und der Scheibe 68 Durchgangslöcher 82, 83 vorgesehen, die eine Welle 84 lagern. Diese steht nicht über die Zahnscheibe 67 und Scheibe 68 hinaus. Sie lagert drehbar ein zweites Zahnrad 86, dessen Zähne 87 mit den Zähnen 83 des ersten Zahnrades 61 kämmen. Die Zähne erstrecken sich rundum auf 360°. Der Außendurchmesser der Zähne 87 bleibt innerhalb des Zahngrunds des Außenzahnkranzes 81. Man sieht also die Zähne 87, zum Beispiel in der Ansicht von Figur 5, nicht.

In den Platinen 43, 44 sind achsparallel zur geometrischen Mittenachse 52 und auf gleichem Abstand von dieser Durchgangsbohrungen 88, 89 vorgesehen. Die Durchgangsbohrungen 88, 89 liegen auf exakt gleicher Winkelteilung. Da neun davon vorgesehen sind, beträgt der winkelmäßige Abstand jeweils 40°. In den Durchgangsbohrungen 88, 89 sind Ausgangswellen 91, 92, 93, 94, 96, 97, 98 und 99 gelagert, die acht unterschiedliche Ausgänge darstellen. Sie tragen undrehbar dritte Zahnräder 101, 102, 103, 104, 106, 107, 108, 109. Deren Teilkreis liegt auf einem solchen Radius, daß jedes der dritten Zahnräder 101 bis 109 mit den Zähnen 87 des zweiten Zahnrads 86 kämmen kann. Dies bedeutet, daß die gemäß Figur 4 rechte Stirnfläche 111 eines jeden Zahnrades 101 bis 109 unter den Außenzahnkranz 81 ragt und damit gehindert ist, sich zu weit nach rechts zu bewegen. Bis zu einem gewissen Grad verhindern dies auch Distanzbuchsen 112. Die linken Stirnflächen 113 liegen an Distanzbuchsen 114 an, die ihrerseits an der Innenfläche 73 anliegen. Alle Ausgangswellen 91 bis 99 haben Innen-Sechskante 116.

Gemäß Figur 3 ist etwa auf einer Uhrzeigerposition von 5.30 Uhr für eine Welle 117 eine Durchgangsbohrung 118 vorgesehen, deren Durchmesser größer ist, als der der Durchgangsbohrungen 88, so daß dort eine als Lagerverstärkung dienende Lagerbuchse 119 aufgenommen werden kann. Diese wiederum hat dann einen Innendurchmesser gemäß dem Innendurchmesser der Durchgangsbohrungen 88, denn die Welle 117 gleicht den Wellen 91 bis 99 im Aufbau. Radial fluchtend mit dem Außenzahnkranz 81 und innerhalb der Platine 43 trägt die Welle 117 ein Zahnrad 121, das mit dem Außenzahnkranz 81 kämmt. Diesem Zahnrad 121 entspricht ein Zahnrad 122, des in dieser Hinsicht abgewandelten Ausführungsbeispiels nach Figur 6 und 7, welches Zahnrad 122 von einem Mikromotor 123 gedreht wird. Damit sich die Welle 117 nicht über die Toleranz hinaus axial bewegen kann, befindet sich auf der Welle 117 eine Distanzbuchse 124, die einerseits an der Innenfläche 73 und andererseits am Zahnrad 121 anliegt. Die Welle 117 hat von rechts her einen Innen-Sechskant 126.

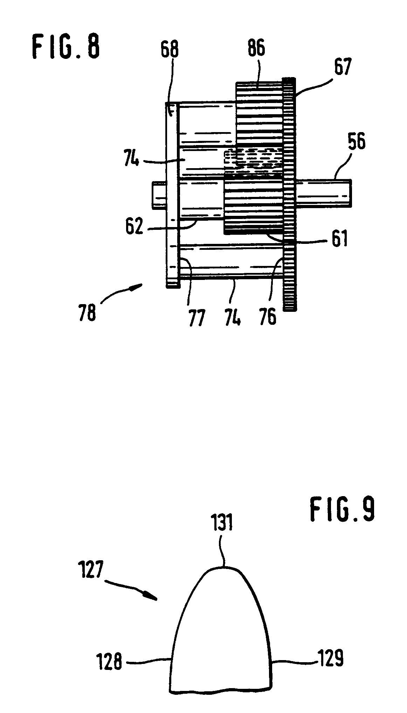

Im Betrieb steckt das eine Ende der biegsamen Welle 16 im Innen-Sechskant 126, so daß man mit dem Wählrad 14 das Zahnrad 121 drehen kann. Damit dreht man den Träger 78. Einer bestimmten Stellung des Wählrads 14 entspricht eine bestimmte Lage des zweiten Zahnrads 86. Gibt man dem Wählrad 14 Raststellungen, dann ist man sicher, daß zum Beispiel in der einen Raststellung - wie gezeichnet - das Zahnrad 86 mit dem Zahnrad 101 kämmt. Schaltet man nun mit dem Schalter 18 den Elektromotor 21 ein, dann treibt dieser über die biegsame Welle 24 die Eingangswelle 56. Es drehen sich die Zahnräder 61, 86 und 101 und damit die biegsame Welle 27, die mit ihrem biegsame Welle 27, die mit ihrem einen Ende im Innen-Sechskant 116 der Ausgangswelle 91 steckt. Damit wird der Bewegungswandler 28 betätigt und je nach Drehrichtung des Elektromotors 21 geht die Kopfstütze 31 auf oder ab. Gemäß Figur 9 hat ein Zahn 127 beiderseits Flanken 128, 129, die oben mit einer Rundung 131 ineinander übergehen, so daß sich die solchermaßen geformten Zähne 87 nicht auf den Zähnen der Zahnräder 101 bis 109 verklemmen können.

## Patentansprüche

1. Vorrichtung zum Verstellen einer Mehrzahl von Teilen eines Automobilsitzes, mit einem Schaltgetriebe, das einen ortsfesten Rahmen umfaßt, an dem eine Eingangswelle (56) mit einem darauf befestigten ersten Zahnrad (61) gelagert ist und an dem eine Mehrzahl von Ausgangswellen (91-99) achsparallel zur Eingangswelle (56) gelagert ist, welche Ausgangswellen jeweils dritte Zahnräder (101-109) undrehbar tragen,
mit einem Elektromotor (21), der in zwei Drehrichtungen antreibbar ist und die Eingangswelle (56) antreibt,
mit einer Schaltvorrichtung, die einen koaxial zur Eingangswelle (56) drehbar gelagerten Träger (78) umfaßt, an dem ein zweites Zahnrad (86) drehbar gelagert ist, das mit dem ersten Zahnrad (61) und wahlweise je nach Drehstellung des Trägers mit einem der dritten Zahnräder (101-109) kämmt,
mit einer Umstellvorrichtung, umfassend einen mit dem Träger (78) verbundenen Antriebsteil, über den ein Drehmoment zur Einstellung des Trägers in vorgebbare Drehstellungen relativ zum Rahmen einleitbar ist
und mit einer Mehrzahl von Bewegungswandlern (28), die von jeweils einer zugeordneten Ausgangswelle angetrieben mindestens mittelbar jeweils eines der Teile des Automobilsitzes verstellen,
wobei der Rahmen zwei mit Abstand parallel zueinander angeordnete Wandteile (43,44) umfaßt, die Eingangswelle (56) an zwei jeweils an den beiden Wandteilen unmittelbar angeordneten ersten Lagerstellen (53,54) drehbar gelagert ist und der Träger (78) zwischen diesen ersten Lagerstellen auf der Eingangswelle (56) drehbar gelagert ist,
dadurch gekennzeichnet,
daß der Träger (78) mit zwei jeweils den ersten Lagerstellen (53, 54) benachbarten zweiten Lagerstellen (69, 71) auf der Eingangswelle (56) gelagert ist, wobei das erste Zahnrad (61) zwischen diesen zweiten Lagerstellen (69, 71) angeordnet ist und daß der Antriebsteil als Außenzahnkranz (81) ausgebildet ist, der zwischen den Wandteilen (43, 44) liegt.

## Claims

1. Device for adjusting a plurality of parts of an automobile seat, with a switching mechanism which comprises a fixed frame, on which an input shaft (56) having a first gearwheel (61) fastened non-rotatably to it is mounted and on which a multiplicity of output shafts (91-99) is mounted axis-parallel to the input shaft (56), which output shafts respectively carry third gearwheels (101-109) non-rotatably, with an electric motor (21) which can be driven in two directions of rotation and which drives the input shaft (56), with a switching device which comprises a carrier (78) which is rotatably mounted coaxially relative to the input shaft (56) and on which is mounted rotatably a second gearwheel (86) which meshes with the first gearwheel (61) and optionally, depending on the rotary position of the carrier, with one of the third gearwheels (101-109), with a changeover device comprising a drive part which is connected to the carrier (78) and via which a torque for setting the carrier in predeterminable rotary positions relative to the frame can be introduced, and with a multiplicity of movement converters (28) which, each driven by an associated output shaft, each adjust at least indirectly one of the parts of the automobile seat, the frame comprising two wall parts (43, 44) which are arranged parallel to and at a distance from one another, the input shaft (56) being rotatably mounted at two first bearing points (53, 54) respectively arranged directly on the two wall parts, and the carrier (78) being rotatably mounted between these first bearing points on the input shaft (56),characterized in that the carrier (78) is mounted in the input shaft (56) by means of two second bearing points (69, 71) respectively adjacent to the first bearing points (53, 54), the first gearwheel (61) being arranged between these second bearing points (69, 71) and in that the drive part is designed as an external toothed rim (81) which is located between the wall parts (43, 44).

## Revendications

1. Dispositif pour le réglage de la plupart des pièces d'un siège d'automobile, présentant
un engrenage de commande, qui comprend un cadre fixe sur lequel est logé un arbre d'entrée (56) avec une roue dentée (61) fixée dessus de manière non rotative, et arbre sur lequel sont logés plusieurs arbres de sortie (91-99) parallèlement à l'axe de l'arbre d'entrée (56), arbres de sortie portant chacun des troisièmes roues dentées (101-109),
un moteur électrique (21) qui peut aller dans deux sens de rotation et qui entraîne l'arbre d'entrée (56),
un dispositif de commande qui comprend un support (78) logé de manière rotative coaxialement à l'arbre d'entrée (56), support sur lequel est logée de manière rotative une seconde roue dentée (86) qui vient en prise avec la première roue dentée (61) et, au choix selon la position de rotation du support, avec l'une des troisièmes roues dentées (101-109),
un dispositif de réglage, comprenant une pièce d'entraînement reliée au support (78), pièce par l'intermédiaire de laquelle un couple de rotation est applicable pour le réglage du support dans des positions de rotation prédéterminables par rapport au cadre,
et plusieurs convertisseurs de mouvement (28) qui étant entrainés chacun par un arbre de sortie correspondant, ajustent, chacun au moins indirectement, l'une des pièces du siège d'automobile,
le cadre comprenant alors deux parties de paroi (43, 44) disposées parallèlement à distance l'une de l'autre, l'arbre d'entrée (56) étant logé de manière rotative sur deux premiers points d'appui (53, 54) disposés chacun directement contre les deux parties de paroi et le support (78) étant logé de manière rotative sur l'arbre d'entrée (56) entre ces deux points d'appui,
caractérisé en ce que
le support (78) est logé sur l'arbre d'entrée (56) par l'intermédiaire de deux seconds points d'appui (69, 71) chacun à proximité des premiers points d'appui (53, 54), la première roue dentée (61) étant disposée entre ces seconds points d'appui (69, 71) et
en ce que la pièce d'entraînement est conçue comme une couronne à denture extérieure (81) qui se trouve entre les parties de paroi (43, 44).
